# EUROPÄISCHE PATENTANMELDUNG

(11) **EP 2 757 565 A1**
(43) Veröffentlichungstag der Anmeldung: **23.07.2014**
(21) Anmeldenummer: 13151904.3
(22) Anmeldetag: 18.01.2013
(51) Int. Cl.: H01C 7/12, H01B 17/38

(54) **Flansch für starre Gehäuse zur elektrischen Isolierung einer elektrischen Komponente**

(71) Anmelder: Siemens Aktiengesellschaft, 80333 München (DE)
(72) Erfinder: Gottschalk, Ingo, 10715 Berlin (DE); Pippert, Erhard, 14624 Dallgow-Döberritz OT Seeburg (DE); Springborn, Dirk, 12203 Berlin (DE); Sulitze, Markus, 14612 Falkensee (DE)

(57) **Zusammenfassung**

Die Erfindung betrifft einen Flansch (1) für ein starres Gehäuse (2) zur elektrischen Isolierung einer elektrischen Komponente, der an die bei unterschiedlichen Gehäuselängen auftretenden unterschiedlichen Belastungen angepasst werden kann. Der Flansch (1) weist dabei einen Stutzen (4) auf, in den das Gehäuse (2) von einem Rand des Stutzens (5) her einschiebbar ist. Erfindungsgemäß weist der Stutzen (4) an seiner äußeren Mantelfläche (31) eine Aufnahme (7) für einen Verstärkungsring (6) auf. Bei einer Verwendung des Flansches (1) für ein kurzes Gehäuse, also eines mit einer geringeren Biegebelastung, wird der Flansch ohne den Verstärkungsring (6) an das Gehäuse (2) montiert, bei einer Verwendung des Flansches (1) mit einem längeren Gehäuse, also einem mit einer höheren Biegebelastung, kann der Flansch (1) mit dem Verstärkungsring (6) versehen werden, und so an die höhere Biegebelastung angepasst werden. Ein Flansch (1) kann so mit Gehäusen (2) unterschiedlicher Länge verwendet werden, und an die unterschiedlichen Biegebelastungen angepasst werden, indem der Flansch (1) je nach auftretender Biegebelastung ohne Verstärkungsring (6) oder mit einem der Biegebelastung angepassten Verstärkungsring (6) verwendet wird.

## Beschreibung

Die Erfindung betrifft einen Flansch für starre Gehäuse zur elektrischen Isolierung einer elektrischen Komponente gemäß dem Oberbegriff des Patentanspruchs 1. Starre Gehäuse sind im Sinne der Erfindung Isoliergehäuse aus einem festen, also nicht flexiblen Material wie Porzellan, Keramik oder glasfaserverstärktem Kunststoff. Nicht als starre Gehäuse im Sinne der Erfindung sind solche aus flexiblem Material wie Silikon anzusehen.

Gehäuse zur elektrischen Isolierung elektrischer Komponenten für Hochspannungsanwendungen sind häufig aus einem starren, also mechanisch stabilen Werkstoff wie Porzellan, Keramik oder glasfaserverstärktem Kunststoff gefertigt. Diese Isoliergehäuse sind meist rohrförmig und können Längen von mehreren Metern aufweisen. An den Enden dieser Isoliergehäuse sind Flansche angebracht, die das Gehäuse abschließen und zur Befestigung dienen. Diese Flansche weisen meist einen rohrartigen Stutzen auf, in den das Isoliergehäuse mit einem Ende eingeschoben wird. Flansch und Isoliergehäuse werden dann miteinander durch Verpressen oder Verkleben verbunden. Insbesondere bei der Montage der elektrischen Komponente können Belastungen durch hohe Biegekräfte entstehen. Der Flansch muss auf diese Biegekräfte ausgelegt sein. Die Biegekräfte sind umso größer, je länger das Isoliergehäuse ist.

Bislang ist bekannt, dass Flansche durch Ihre Dimensionierung beispielsweise der Wandstärke des Stutzens oder durch die Materialwahl, beispielsweise Alu oder Stahl, an die auftretenden Belastungen angepasst werden. Dafür ist es erforderlich, für jede verwendete Isoliergehäuselänge und die damit verbundenen Belastungen einen eigenen Flansch zu konstruieren und vorzuhalten.

Aufgabe der vorliegenden Erfindung ist es, einen Flansch anzugeben, der an verschiedene Abmessungen des Isoliergehäuses und die damit verbundenen Belastungen angepasst werden kann.

Die Aufgabe wird mit den Mitteln der Erfindung gemäß Patentanspruch 1 gelöst.

Vorgesehen ist dazu ein Flansch für ein starres Gehäuse zur elektrischen Isolierung einer elektrischen Komponente, beispielsweise ein Gehäuse aus Porzellan, Keramik, oder glasfaserverstärktem Kunststoff. Die elektrische Komponente kann dabei beispielsweise ein Überspannungsableiter, eine Wanddurchführung oder ein Isolator sein. Insbesondere sind elektrische Komponenten solche, die zur Verwendung in Hochspannungsanlagen vorgesehen sind. Der Flansch weist dabei einen Stutzen auf, in den das Gehäuse von einem Rand des Stutzens her einschiebbar ist. Erfindungsgemäß weist der Stutzen an seiner äußeren Mantelfläche eine Aufnahme für einen Verstärkungsring auf. Bei einer Verwendung des Flansches für ein kurzes Gehäuse, also eines mit einer geringeren Biegebelastung wird der Flansch ohne den Verstärkungsring an das Gehäuse montiert, bei einer Verwendung des Flansches mit einem längeren Gehäuse, also einem mit einer höheren Biegebelastung, kann der Flansch mit dem Verstärkungsring versehen werden, und so an die höhere Biegebelastung angepasst werden. Ein Flansch kann so mit Gehäusen unterschiedlicher Länge verwendet werden, und an die unterschiedlichen Biegebelastungen angepasst werden, indem der Flansch je nach auftretender Biegebelastung ohne Verstärkungsring oder mit einem der Biegebelastung angepassten Verstärkungsring verwendet wird. Dadurch wird die Lagerhaltung für nur noch eine Flanschvariante pro Gehäusedurchmesser erheblich vereinfacht.

In einer vorteilhaften Ausführungsform der Erfindung ist die Aufnahme als Absatz oder Konus des Stutzens ausgebildet. Im Falle des Absatzes dient dieser als Anschlag und ermöglicht so einen definierten Sitz des Verstärkungsringes in der Aufnahme und erleichtert so die Montage. Im Falle des Konus lässt sich ein mit einem entsprechenden Gegenkonus versehener Verstärkungsring auf einfache Weise mit dem Stutzen verspannen.

Vorteilhaft ist die Mantelfläche im Bereich der Aufnahme wenigstens abschnittsweise geriffelt oder aufgeraut. Hierdurch wird auf einfache Weise erreicht, dass ein Verstärkungsring in der Aufnahme gehalten wird, auch wenn der Flansch beispielsweise bei der Montage des Gehäuses in unterschiedliche Positionen gedreht wird.

In einer weiteren vorteilhaften Ausgestaltung der Erfindung ist vorgesehen, dass von der Aufnahme ein Verstärkungsring derart aufgenommen ist, dass der Verstärkungsring den Stutzen koaxial umschließt. Durch den Verstärkungsring wird der Flansch bei einer höheren Biegebelastung, wie sie bei der Verwendung längerer Gehäuse auftritt, an diese angepasst. Der Verstärkungsring umschließt dabei den Stutzen im Bereich des Stutzenrandes koaxial, der Mittelpunkt des Verstärkungsringes liegt also auf der Längsachse des Stutzens. Der Stutzen ist damit durch den Verstärkungsring verstärkt und kann somit höhere Biegebelastungen aufnehmen.

In einer besonders vorteilhaften Ausführung liegt der Verstärkungsring an der äußeren Mantelfläche des Stutzens flächig an. Dabei kann der Verstärkungsring jedoch teilweise über den Stutzenrand hinausragen. Durch das flächige Anliegen wird eine besonders hohe Steigerung der Belastbarkeit des Flansches erreicht.

In einer weiteren vorteilhaften Ausgestaltung der Erfindung ist der Verstärkungsring mit dem Stutzen verspannt oder verklebt. Hierdurch wird eine dauerhafte, gegebenenfalls auch witterungsbeständige und im Falle der Verspannung auch wieder lösbare, Verbindung des Verstärkungsringes mit dem Flansch erreicht.

Des Weiteren sieht eine vorteilhafte Ausgestaltung der Erfindung vor, dass die Aufnahme einen Konus und der Verstärkungsring einen entsprechenden Gegenkonus aufweist, wodurch der Verstärkungsring mit dem Stutzen verspannbar ist. Dazu ist ein Teil der äußeren Mantelfläche des Stutzens gegen die Längsachse des Flansches leicht geneigt, und bildet so den Konus. Die innere Mantelfläche des Verstärkungsringes ist entsprechend entgegengesetzt geneigt und bildet so den Gegenkonus. Konus und Gegenkonus liegen dabei aneinander an. Der Verstärkungsring ist dabei in Richtung der Längsachse des Flansches gegen den Stutzen verschiebbar, wodurch der Verstärkungsring mit dem Stutzen verspannbar ist. Hierdurch wird eine besonders einfache und stabile Montage des Verstärkungsringes an den Flansch ermöglicht.

In einer alternativen Ausführungsform ist der Verstärkungsring als Bandage aus einem bandartigen Gewebe ausgebildet. Vorzugsweise wird dazu ein Gewebe aus einem Werkstoff hoher Zugfestigkeit wie Glas- oder Kohlefaser verwendet. Das Gewebe kann vor oder nach dem Herstellen der Bandage in eine Kunststoffmatrix eingebettet werden. Dazu wird beispielsweise ein Band aus Glasfasergewebe um einen Abschnitt der äußeren Mantelfläche unter Zug herumgewickelt und danach mit einem Kunststoff, beispielsweise einem Harz, getränkt, der dann aushärtet und mit dem Glasfasergewebe einen festen Verband bildet. Das Glasfasergewebe kann selbstverständlich auch vor dem Aufbringen auf den Stutzen mit dem Kunststoff getränkt werden. Der Abschnitt des Stutzens, der als Aufnahme für die Bandage dient, muss dazu entsprechend ausgestaltet sein, also beispielsweise eine glatte, möglichst zylindrische Fläche bieten.

Im Folgenden wird die Erfindung anhand der Zeichnungen näher erläutert. Dabei zeigen:
- Figur 1: eine elektrische Komponente nach dem Stand der Technik,
- Figur 2: einen Ausschnitt aus Figur 1,
- Figur 3: eine perspektivische Darstellung einer Ausführungsform eines erfindungsgemäßen Flansches,
- Figur 4: eine Schnittdarstellung gemäß Figur 3,
- Figur 5 bis Figur 8: Teilschnittdarstellungen verschiedener Ausführungsformen der Erfindung.

Einander entsprechende Teile sind in allen Figuren mit den gleichen Bezugszeichen versehen.

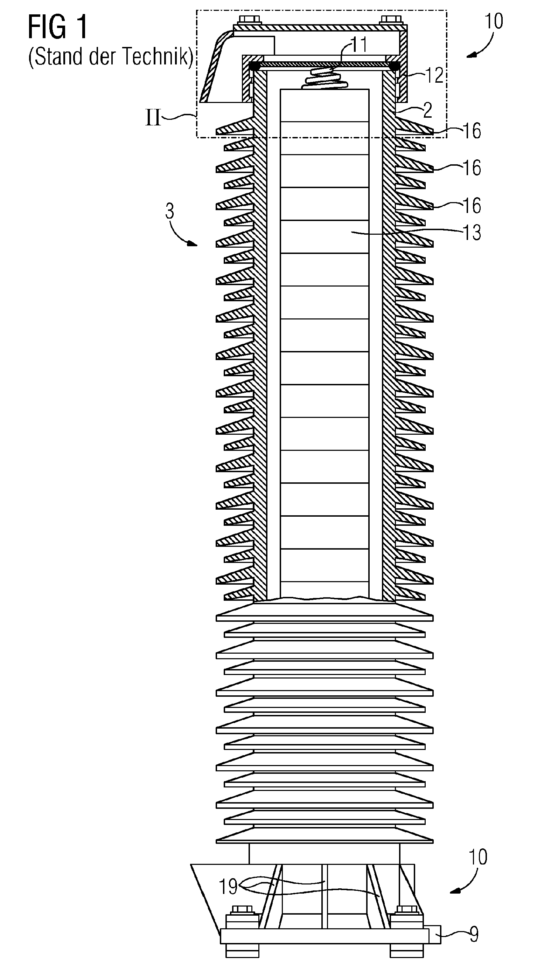

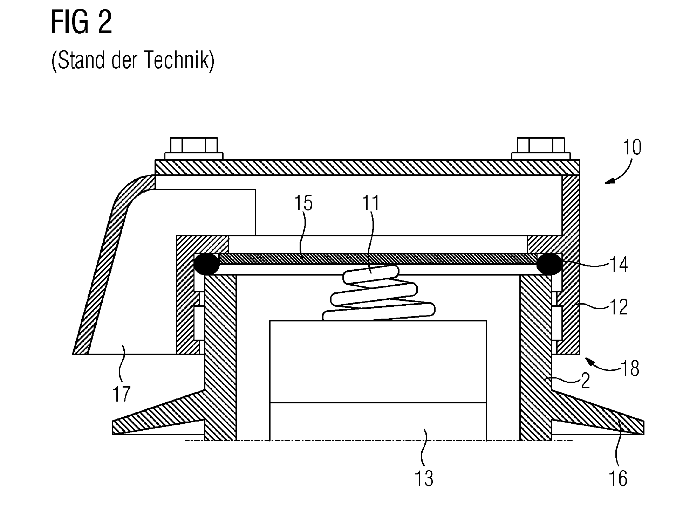

Die Figur 1 zeigt eine Teilschnittdarstellung einer elektrischen Komponente 3 nach dem Stand der Technik, hier einen Überspannungsableiter, Figur 2 einen Ausschnitt im Bereich des oberen Flansches 10 daraus. Ein starres Gehäuse 2, beispielsweise aus Porzellan, das zur elektrischen Isolierung der elektrischen Komponente 3 dient, ist rohrförmig und trägt zur Verlängerung des Kriechweges Schirme 16 auf der Außenseite. Im Inneren des Gehäuses 2 ist ein Stapel aus Varistorelementen 13 angeordnet. Je nach Art der elektrischen Komponente 3 können im Inneren des Gehäuses 2 aber auch andere Elemente angeordnet sein, im Falle eines Isolators kann das Innere auch hohl oder mit dem Gehäusematerial ausgefüllt sein. Zwei Flansche 10 sind an den Enden des Gehäuses 2 angeordnet. Die Enden des Gehäuses 2 sitzen dabei in Stutzen 12 des Flansches 10 und sind dort verklebt oder verpresst. Federn 11 pressen den Varistorstapel 13 zusammen, um einen guten elektrischen Kontakt zu gewährleisten. Ein Dichtungssystem aus Dichtungen 14 und einer Abdeckung 15 schließt das Gehäuse 2 gasdicht nach außen ab. Die Abdeckung 15 kann als Berstscheibe gestaltet sein, die dazu vorgesehen ist, im Fehlerfalle bei einem entstehenden Überdruck, zu zerbrechen, und den Überdruck über eine Ausblasöffnung 17 aus dem Gehäuse 2 austreten zu lassen. Längsstreben 19 sind von der Montageplatte bis zum Rand des Stutzens 12 geführt und versteifen den Stutzen 12.

Die Flansche 10 sind meist Gussteile aus Aluminium. Insbesondere bei der Montage der elektrischen Komponente 3 treten hohe Biegebelastungen im Bereich des Stutzens 12 auf. Dabei kann es zum Bruch des Flansches 10 oder des Gehäuses 2 kommen. Wie Untersuchungen gezeigt haben, ist der am häufigsten auftretende Schadensfall, ein Bruch des Flansches 10 im Bereich des Stutzenrandes 18. Bisher wurde dem begegnet, indem der Flansch 10 in seinem Material und Proportionen an die Länge des Gehäuses und damit an die auftretende Biegebelastung angepasst wurde. Beispielsweise wurde für einen längeres Gehäuse 2 ein festeres Material wie Stahl und für ein kürzeres ein weniger festes wie Aluminium verwendet. Zusätzlich oder alternativ wurde für höhere Biegebelastungen eine größere Wandstärke für den Stutzen 12 des Flansches 10 gewählt. Dies führte dazu, dass zu jeder Variante des Gehäuses ein eigener Flansch konstruiert, getestet, freigegeben, produziert und vorgehalten werden musste.

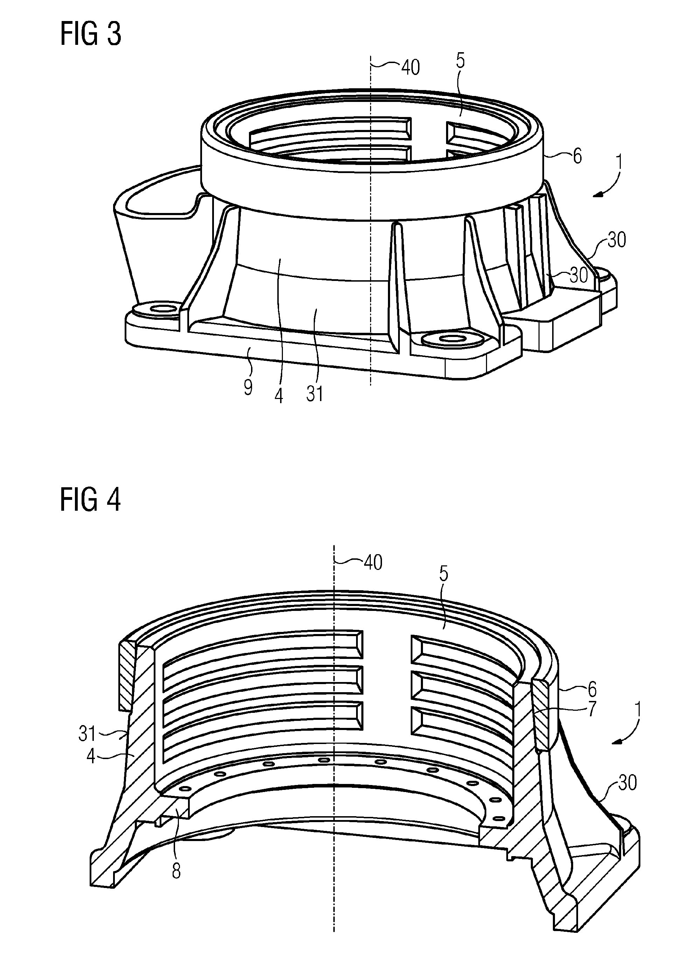

Die Figur 3 zeigt einen erfindungsgemäßen Flansch 1 in einer perspektivischen Darstellung, die Figur 4 denselben Flansch 1 in einer Schnittdarstellung. Von einer Montageplatte 9 erstreckt sich ein rohrförmiger Stutzen 4 entlang einer Längsachse 40. Zwischen Montageplatte 9 und Stutzen 4 ist ein Kragen 8 auf der Innenseite des Flansches angeordnet, der der Aufnahme von einer Dichtung und einer Abdeckung dient. Der Stutzen ist an der der Montageplatte 9 gegenüber liegenden Seite begrenzt durch den Rand 5. Von diesem Rand 5 her kann ein Gehäuse in den Stutzen 4 eingeschoben werden. An der äußeren Mantelfläche 31 des Stutzens 4 sind Längsstreben 30 angeordnet. Ein Abschnitt der äußeren Mantelfläche 31 im Bereich des Randes 5 ist freigehalten von Längsstreben 30 und dient als Aufnahme 7 für den Verstärkungsring 6. Der Verstärkungsring 6 liegt mit seiner inneren Mantelfläche an der äußeren Mantelfläche 31 des Stutzens 4 an und umschließt den Stutzen 4 koaxial zu einer Längsachse 40. Dieser Verstärkungsring 6 stützt und verstärkt den Stutzen 4 falls der Flansch 4 einer erhöhten Biegebelastung ausgesetzt sein kann. Auf die Höhe der Biegebelastung kann der Verstärkungsring 6 angepasst sein, indem für höhere Biegebelastungen die axialen und/oder radialen Abmessungen vergrößert werden, oder indem der Verstärkungsring 6 aus Material mit höherer Zugfestigkeit gefertigt wird. Die äußere Mantelfläche 31 des Stutzens 4 ist im Bereich der Aufnahme 7 konisch ausgeführt. Die Wand des Stutzens 4 verjüngt sich also zum Rand 5 des Stutzens 4 hin. Der Verstärkungsring 6 weist auf seiner inneren Mantelseite einen entsprechenden Gegenkonus auf. Der Verstärkungsring 6 kann somit leicht auf den Konus der Aufnahme 7 aufgepresst und dort gehalten werden. Der Flansch 1 kann so einerseits ohne Verstärkungsring 6 verwendet werden, falls ein Gehäuse mit einer entsprechend niedrigen Biegebelastung mit dem Flansch 1 zum Einsatz kommt. Kann bei Verwendung eines längeren Gehäuses eine höhere Biegebelastung auftreten, so kann der Flansch 1 mit einem der Biegebelastung entsprechenden Verstärkungsring 6 versehen werden. So müssen für verschiedene Gehäuselängen nicht mehr jeweils eine Variante des Flansches 1 vorgehalten werden, sondern lediglich entsprechende Ausführungen des Verstärkungsringes 6.

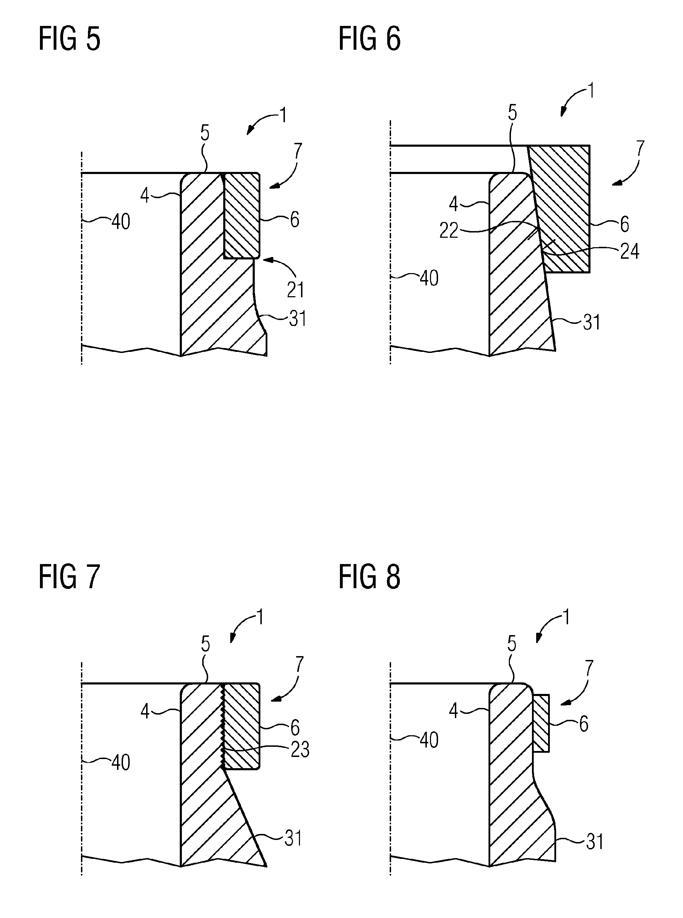

Die Figuren 5 bis 8 zeigen verschiedene Ausführungsformen der Aufnahme 7 und des dazugehörigen Verstärkungsringes 6. Die Figuren zeigen dabei einen Ausschnitt des Stutzens 4 im Bereich des Randes 5.

Die Figur 5 zeigt dabei eine Aufnahme 7 mit einem Absatz 21. Der Verstärkungsring 6 liegt mit seiner Innenseite an der äußeren Mantelfläche der Aufnahme 7 flächig an und mit einer Stirnseite an dem Absatz 21 der Aufnahme 7.

Die Figur 6 zeigt eine Aufnahme 7 mit einem Konus 24. Der Stutzen 4 verjüngt sich im Bereich der Aufnahme 7 zum Rand 5 hin. Der Verstärkungsring 6 weist einen entsprechenden Gegenkonus 22 auf. Indem der Verstärkungsring 6 vom Rand 5 her auf den Stutzen 4 geschoben wird, kann er leicht mit diesem verspannt werden.

In der Figur 7 weist die Aufnahme 7 eine geriffelte oder aufgeraute Oberfläche 23 auf. Der Verstärkungsring 6 kann ebenfalls eine geriffelte oder aufgeraute Oberfläche aufweisen.

In der Figur 8 ist in der Aufnahme 7 ein Verstärkungsring 6 aufgenommen, der als Bandage ausgeführt ist. Dabei wird im Bereich der Aufnahme 7 ein Band aus einem Glas- oder Kohlefasergewebe in mehreren Windungen unter Zug um den Stutzen 4 des Flansches 1 herumgeführt. Das Ende des Bandes wird fixiert und das Gewebe mit einem aushärtenden Kunststoff beispielsweise einem Kunstharz getränkt. Alternativ kann das Gewebe vor dem Wickelvorgang mit Kunststoff getränkt werden. Nach dem Aushärten des Kunststoffes ist der Verstärkungsring 6 in der Aufnahme 7 fixiert.

## Patentansprüche

1. Flansch (1) für ein starres Gehäuse (2) zur elektrischen Isolierung einer elektrischen Komponente (3), mit einem Stutzen (4), in den das Gehäuse (2) von einem Rand (5) des Stutzens (4) her einschiebbar ist,
**dadurch gekennzeichnet,**
**dass** der Stutzen (4) an seiner äußeren Mantelfläche (31) eine Aufnahme (7) für einen Verstärkungsring (6) aufweist.

2. Flansch (1) nach Anspruch 1,
**dadurch gekennzeichnet,**
**dass** die Aufnahme (7) als Absatz (21) oder Konus (24) des Stutzens (4) ausgebildet ist.

3. Flansch (1) nach einem der Ansprüche 1 oder 2,
**dadurch gekennzeichnet,**
**dass** die Mantelfläche (31) im Bereich der Aufnahme (7) wenigstens abschnittsweise geriffelt oder aufgeraut ist.

4. Flansch (1) nach einem der Ansprüche 1 bis 3,
**dadurch gekennzeichnet,**
**dass** von der Aufnahme (7) ein Verstärkungsring (6) derart aufgenommen ist, dass der Verstärkungsring (6) den Stutzen (4) koaxial umschließt.

5. Flansch (1) nach Anspruch 4,
**dadurch gekennzeichnet,**
**dass** der Verstärkungsring (6) an der äußeren Mantelfläche (31) des Stutzens (4) flächig anliegt.

6. Flansch (1) nach einem der Ansprüche 4 bis 5,
**dadurch gekennzeichnet,**
**dass** der Verstärkungsring (6) mit dem Stutzen (4) verspannt oder verklebt ist.

7. Flansch (1) nach einem der Ansprüche 4 bis 6,
**dadurch gekennzeichnet,**
**dass** die Aufnahme (7) einen Konus (24) und der Verstärkungsring (6) einen entsprechenden Gegenkonus (22) aufweisen, wodurch der Verstärkungsring (6) mit dem Stutzen (4) verspannbar ist.

8. Flansch (1) nach einem der Ansprüche 4 bis 7,
**dadurch gekennzeichnet,**
**dass** der Verstärkungsring (6) aus Aluminium oder Stahl oder glas- oder kohlefaserverstärktem Gewebe gefertigt ist.

9. Flansch nach Anspruch 8,
**dadurch gekennzeichnet,**
**dass** der Verstärkungsring (6) als Bandage aus glas- oder kohlefaserverstärktem Gewebe ausgebildet ist.
